(19) Europäisches Patentamt
European Patent Office
Office européen des brevets

(11) EP 4 457 970 B1

(12) EUROPÄISCHE PATENTSCHRIFT

(45) Veröffentlichungstag und Bekanntmachung des Hinweises auf die Patenterteilung:
16.04.2025 Patentblatt 2025/16

(21) Anmeldenummer: 23814130.3

(22) Anmeldetag: 26.11.2023

(51) Internationale Patentklassifikation (IPC):
H04L 9/06 (2006.01)

(52) Gemeinsame Patentklassifikation (CPC):
H04L 9/0637; H04L 2209/84

(86) Internationale Anmeldenummer:
PCT/EP2023/083082

(87) Internationale Veröffentlichungsnummer:
WO 2024/126012 (20.06.2024 Gazette 2024/25)

## (54) VERFAHREN ZUR VERSCHLÜSSELUNG EINES KLARTEXTES

METHOD FOR ENCRYPTING PLAIN TEXT

PROCÉDÉ DE CHIFFREMENT DE TEXTE EN CLAIR

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR

(30) Priorität: 12.12.2022 DE 102022004632

(43) Veröffentlichungstag der Anmeldung:
06.11.2024 Patentblatt 2024/45

(73) Patentinhaber: Mercedes-Benz Group AG
70372 Stuttgart (DE)

(72) Erfinder: FRIESEN, Viktor
76139 Karlsruhe (DE)

(74) Vertreter: Novagraaf Group
Chemin de l'Echo 3
1213 Onex / Geneva (CH)

(56) Entgegenhaltungen:
DE-A1- 102019 113 026     US-A1- 2010 169 645
US-A1- 2022 109 559

**Beschreibung**

Die Erfindung betrifft ein Verfahren zur Verschlüsselung eines in einer Klartext-Nachricht enthaltenen zu verschlüsselnden Klartextes nach der im Oberbegriff des Anspruchs 1 näher definierten Art.

Kryptographische Funktionen, die für die Verschlüsselung verwendet werden, werden Chiffren genannt. Eine Chiffre, wie sie in diesem Text genutzt wird, besteht aus einer Verschlüsselungsfunktion und einer Entschlüsselungsfunktion. Eine Verschlüsselungsfunktion bildet Klartexte auf Chiffretexte ab, die dazugehörige Entschlüsselungsfunktion bildet Chiffretexte auf Klartexte ab. Dabei sind die beiden Funktionen natürlicherweise injektiv. Verschlüsselungsfunktionen nutzen oft kryptografische Schlüssel. Nutzt eine Verschlüsselungsfunktion ENCR den Schlüssel K und soll das explizit angezeigt werden, so wird das in diesem Text durch $ENCR_K$ oder ENCR_K symbolisiert. Für eine Entschlüsselungsfunktion DECR symbolisiert $DECR_K$ bzw. DECR_K analog, dass die Entschlüsselungsfunktion für die Entschlüsselung den Schlüssel K nutzt.

Das hochfrequente Versenden und Empfangen kurzer Nachrichten ist bei manchen Anwendungen innerhalb eines Fahrzeug-Ökosystems von großer Bedeutung, Beispiele hierfür finden sich bspw. in der DE 10 2021 001 095 A1. Es ist dabei, wie in dieser Schrift dargestellt, oft unerlässlich, diese Nachrichten mit einem kryptographischen Integritätsschutz und/oder einem kryptographischen Replay-Schutz zu versehen, ohne dabei die Länge der Nachrichten zu stark zu erhöhen, wobei, wie in der genannten Veröffentlichungsschrift dargestellt, für diesen Zweck aus Effizienzgründen ausschließlich symmetrische Verfahren in Frage kommen können. In manchen Fällen kann es jedoch wichtig sein, die gesamte Nachricht oder zumindest einen Teil davon, bspw. die Nutzdaten, zu verschlüsseln, um bspw. vertrauliche Nutzdaten zu schützen und/oder einem potentiellen Angreifer das Mitlesen, Interpretieren und damit das Reverse Engineering der Nachrichten und des genutzten Protokolls zu erschweren.

Ähnliche wie die für den Integritäts- und den Replay-Schutz in der DE 10 2021 001 095 A1 angestellten Überlegungen gelten auch für die Verschlüsselung. Prinzipiell könnten insbesondere kurze Nachrichten asymmetrisch, bspw. mit auf RSA basierenden Verfahren, verschlüsselt werden. Der RSA-Chiffretext eines Klartextes ist jedoch mindestens so lang wie der zur Verschlüsselung verwendete Schlüssel, also bspw. 2048 Bit bei der Verwendung von RSA-2048. Damit wird aus einer bspw. 20 Byte, also 160 Bit langen unverschlüsselten Nachricht eine mindestens 2048 Bit lange verschlüsselte zu übertragende Nachricht, was der Notwenigkeit der Verwendung kurzer Nachrichten vollständig zuwiderläuft. Außerdem benötigt asymmetrische Entschlüsselung ein Vielfaches an Zeit im Vergleich zur symmetrischen Ver- oder Entschlüsselung. Damit kommen für eine effiziente Verschlüsselung kurzer hochfrequenter Nachrichten nur symmetrische Verfahren in Frage.

Zur symmetrischen Verschlüsselung werden heute meist Blockchiffren wie bspw. AES eingesetzt. Die Blockgröße einer Blockchiffre E wird hier mit $L_E$ oder L_E bezeichnet. Bei der Raw-Verschlüsselung mit einer Blockchiffre E der Blockgröße $L_E$ wird ein genau $L_E$ Bit langer Klartext, ein sog. Klartextblock, mit Hilfe eines symmetrischen Schlüssels zu einem genau $L_E$ Bit langen Chiffretext, einem sog. Chiffretextblock, verschlüsselt. Entsprechend wird bei der Raw-Entschlüsselung mit einer zu einer Blockchiffre E der Blockgröße $L_E$ gehörenden Entschlüsselungsfunktion D ein (genau $L_E$ Bit langer) Chiffretextblock mit Hilfe eines symmetrischen Schlüssels zu einem (genau $L_E$ Bit langen) Klartextblock entschlüsselt. In beiden Fällen wird also immer genau ein kompletter Block verarbeitet, Eingaben mit abweichenden Längen werden nicht akzeptiert. Die E-Raw-Verschlüsselung bzw. die D-Raw-Entschlüsselung wird hier mit $E^{RAW}$ bzw. $D^{RAW}$ bezeichnet. Die E-Raw-Verschlüsselung mit einem symmetrischen Schlüssel K wird mit $E^{RAW}_K$ und die D-Raw-Entschlüsselung mit einem symmetrischen Schlüssel K wird mit $D^{RAW}_K$ bezeichnet.

Bei einer Verschlüsselung mit einer Blockchiffre E wird ein Klartext, der länger als $L_E$ Bit ist, in der Chiffre-Blockgröße $L_E$ entsprechende Blöcke eingeteilt, die dann einzeln mit Hilfe eines symmetrischen Schlüssels verschlüsselt werden. Die voneinander vollständig unabhängige Verschlüsselung der einzelnen Klartextblöcke wird ECB-Modus (einer Blockchiffre) genannt. Im Unterschied zur Raw-Verschlüsselung kann eine im ECB-Modus betriebene Chiffre mit Eingaben beliebiger Längen umgehen. Ist dabei der letzte Klartextblock kürzer als die Blockgröße der Blockchiffre, wird ein sog. Padding angewendet, das diesen letzten Klartextblock auf eine definierte Weise auffüllt. ECB ist der einfachste Betriebsmodus für eine Blockchiffre, er hat jedoch den Nachteil, dass dabei bei der Verwendung desselben Schlüssels gleiche Klartextblöcke zu gleichen Chiffretextblöcken verschlüsselt werden, wodurch ein Angreifer Rückschlüsse in Bezug auf die korrespondierenden Klartextblöcke ziehen könnte.

Als Abhilfe gegen diese ECB-Schwäche sind komplexere Betriebsmodi (CBC, CFB, OFB, CTR, etc.), entwickelt worden, bei denen statt der voneinander unabhängigen direkten Verschlüsselungen der einzelnen Klartextblöcke, wie beim ECB-Modus, die Verschlüsselungen der einzelnen Klartextblöcke miteinander mehr oder weniger eng verwoben werden, so dass in die Verschlüsselung eines nächsten Klartextblocks zusätzlich zum Klartextblock selbst und zum Schlüssel, weitere während der Verschlüsselung seines Vorgängerblockes erzeugte i.d.R. eine Blockgröße lange Daten eingehen, wobei diese in die Verschlüsselung des nächsten Klartextblocks eingehenden Daten vom Vorgänger-Klartextblock abhängen können (CBC, CFB) oder davon unabhängig sein können (OFB, CTR).

Auf diese Weise werden, grob gesagt, i.d.R. gleiche Klartextblöcke zu verschiedenen Chiffretextblöcken verschlüsselt, was jedoch nicht für den ersten Klartextblock gilt, da dieser keinen Vorgängerblock hat, von dem er die zusätzlichen Eingabedaten erhalten könnte. Um dem abzuhelfen, werden i.d.R. eine Blockgröße lange Initialisierungsvektoren, die als diese zusätzlichen Daten bei der Verschlüsselung des ersten Blocks genutzt werden, verwendet. Dabei darf ein Initialisierungsvektor jeweils nur einmal, also nur für einen Klartext, verwendet werden, ansonsten werden (bei gleichem Schlüssel) wiederum für gleiche Klartextblöcke gleiche Chiffretextblöcke erzeugt, ein Initialisierungsvektor muss also während der Verwendung desselben Schlüssels eine Nonce sein. Dabei muss ein Initialisierungsvektor nur neuartig, also eine Nonce, sein, er muss nicht geheim gehalten werden. Vielmehr wird der für die Verschlüsselung verwendete Initialisierungsvektor bei der Entschlüsselung ebenfalls benötigt, der Initialisierungsvektor muss also sowohl dem Sender als auch dem Empfänger bekannt sein. Da er nicht geheim gehalten werden muss, kann er bspw. auch als expliziter unverschlüsselter Teil der Nachricht übertragen werden, was bspw. bei TLS gemacht wird. Ist das der Fall, so darf er nicht verschlüsselt übertragen werden, denn ohne den als Klartextblock vorliegenden Initialisierungsvektor kann der Empfänger die verschlüsselte Nachricht nicht entschlüsseln.

Die explizite Übertragung des Initialisierungsvektors insb. als Teil kurzer Nachrichten ist jedoch ressourcenintensiv, da ein Initialisierungsvektor i.d.R. einen Block lang ist, bspw. 128 Bit bei AES. Wenn vorab bekannt ist, wie viele Nachrichten maximal mit demselben Schlüssel verschlüsselt werden, so kann auf Seiten des Senders ein Zähler geführt werden, der bei jeder neuen Nachricht um eins inkrementiert wird. Aus diesem Zähler kann dann, bspw. durch ein geeignetes zwischen dem Sender und dem Empfänger abgestimmtes Paddingverfahren, mit dessen Hilfe die Zählerbits durch weitere Bits ergänzt werden oder mit Hilfe einer kryptographischen Hashfunktion gefolgt von einer ggf. notwendigen Längenanpassung, vom Sender für jede neue Nachricht ein wegen der zuvor stattgefundenen Inkrementierung des Zählers neuer, i.d.R. einen Block langer Initialisierungsvektor erzeugt und für die Verschlüsselung der Nachricht verwendet werden. Anstatt den gesamten Initialisierungsvektor mit jeder Nachricht mitzuschicken, wird dann nur der Zähler, also die den Zähler repräsentierenden Zählerbits, die die Nummer der jeweiligen Nachricht repräsentieren, mitgeschickt. Dadurch kann der in der Nachricht benötigte Platz von bspw. 128 Bit auf bspw. 32 Bit, bei einem 32 Bit langen Zähler, reduziert werden.

Besonders platzsparend wäre es, einen impliziten geteilten Initialisierungsvektor zu verwenden, indem der Sender und der Empfänger zu Beginn einen gemeinsamen Start-Initialisierungsvektor und eine Vorschrift zur Generierung eines neuartigen nächsten Initialisierungsvektors aus dem aktuellen Initialisierungsvektor vereinbaren und diesen nächsten neuartigen Initialisierungsvektor dann synchron für jede neue Nachricht auf beiden Seiten mit Hilfe der zuvor vereinbarten Vorschrift generieren. Das Problem hierbei ist, dass Nachrichten verlorengehen oder in der falschen Reihenfolge ankommen können, wodurch die Synchronität der vom Sender und vom Empfänger geführten Initialisierungsvektoren verlorengeht.

Eine andere ebenso platzsparende Art, einen Initialisierungsvektor zwischen Sender und Empfänger implizit zu synchronisieren, wäre es, diesen aus der Nachricht selbst, die sowieso übertragen werden muss, auf eine sichere Weise abzuleiten, was der Sender und der Empfänger unabhängig voneinander machen könnten. Das Problem hierbei ist, dass der Initialisierungsvektor auf der einen Seite dem Sender vor dem Verschlüsselungsvorgang bekannt und damit aus der Klartextnachricht ableitbar sein muss, auf der anderen Seite jedoch dem Empfänger vor dem Entschlüsselungsvorgang bekannt und damit aus der verschlüsselten Nachricht ableitbar sein muss, was eine (auf den ersten Blick) widersprüchliche Forderung ist.

Sogenannte synthetische Initialisierungsvektoren (SIV) die bei speziellen AEAD-Verfahren ("Authenticated Encryption with Associated Data"), also Verfahren, die sowohl eine Verschlüsselung als auch eine Authentifizierung ermöglichen, eingesetzt werden, zeichnen sich dadurch aus, dass sie den für die Verschlüsselung verwendeten Initialisierungsvektor aus der Nachricht selbst generieren, indem aus der Nachricht ein eindeutiger Authentifizierungsstempel (Tag) erzeugt wird, der dann bei der Verschlüsselung der Nachricht oder Teilen davon als Initialisierungsvektor verwendet wird. Es sind für verschiedene AEAD-Betriebsmodi auf synthetischen Initialisierungsvektoren basierende AEAD-Varianten entwickelt worden, bspw. für eine Kombination aus CMAC und CTR (SIV-AES), für AES-GCM (AES-GCM-SIV) oder für CCM (CCM-SIV) (vgl. auch DE 10 2019 113 026 A1). Da der Initialisierungsvektor, also der aus der unverschlüsselten Nachricht erzeugte Authentifizierungsstempel, jedoch bei der Entschlüsselung der Nachricht auch benötigt wird, er aber vom Empfänger aus der verschlüsselten Nachricht nicht unmittelbar abgeleitet werden kann, muss er zusammen mit der verschlüsselten Nachricht dem Empfänger unverschlüsselt zugeschickt werden, wodurch durch die Verwendung eines synthetischen Initialisierungsvektors nach den oben erwähnten Verfahren kein Platz in der Nachricht eingespart wird.

In der WO 2009/013420 A1 wird ein auf Blockchiffren basierendes CBC-MAC-ähnliches Authentifizierungsverfahren definiert, das den Message Authentication Code (MAC) statt, wie bspw. bei CBC-MAC, nur über die Nachricht selbst, über die um einen den Hashwert der Nachricht enthaltenden Präfix erweiterte Nachricht berechnet.

Die WO 2019/ 079 890 A1 offenbart zudem ein Computer-implementiertes Verfahren für einen Empfänger, um eine von einem Sender erhaltene Nachricht zu validieren. Die Nachricht enthält einen ersten und einen zweiten Teil. Das Verfahren umfasst den Empfang eines Tokens von einer Zertifizierungs-Einheit und einen mit dem Sender assoziierten Schlüssel. Zum Validieren der Nachricht verarbeitet und vergleicht das Verfahren den ersten Teil der Nachricht zusammen mit dem Token und den zweiten Teil der Nachricht zusammen mit dem Schlüssel.

Die allgemein verbreitete Forderung, dass für die Verschlüsselung jedes neuen Klartextes ein neuartiger Initialisierungsvektor genutzt werden soll, ist für die Behebung der oben geschilderten Schwäche hinreichend aber nicht unbedingt notwendig. Kann nämlich sichergestellt werden, dass der erste Block eines Klartextes immer neuartig ist, so kann auf die Forderung der Nutzung eines neuartigen Initialisierungsvektors bei den Betriebsmodi, die bei der Verkettung der Blöcke den vorhergehenden Block, insb. den vorhergehenden Chiffretextblock, miteinbeziehen (bspw. CBC, CFB), verzichtet werden. Es genügt also in bestimmten Fällen, dass für einen festen Schlüssel die Kombination aus dem Initialisierungsvektor und dem ersten Klartextblock neuartig ist. Sind die ersten Klartextblöcke immer neuartig, so kann in diesen bestimmten Fällen auf die Verwendung eines Initialisierungsvektors sogar ganz verzichtet werden.

Will oder muss man bspw. aus Platzgründen auf einen garantiert neuartigen (expliziten oder impliziten) Initialisierungsvektor für jeden zu verschlüsselnden Klartext verzichten, so ist es sinnvoll, das Format der Klartexte so zu gestalten, dass die Wahrscheinlichkeit, dass der erste Block eines Klartextes immer neuartig ist, maximiert wird.

Weil die Wahrscheinlichkeit, dass die einzelnen Klartexte "neuartig", also paarweise verschieden, sind, größer ist, als die Wahrscheinlichkeit, dass die ersten Blöcke der jeweiligen Klartexte neuartig, also paarweise verschieden, sind, ist es sinnvoll, um mit größtmöglicher Wahrscheinlichkeit neuartige erste Blöcke zu erreichen, die "Neuartigkeit" des gesamten Klartextes im ersten Block zu sammeln, also die ersten Blöcke der jeweiligen Klartexte so zu gestalten, dass die ersten Blöcke von zwei unterschiedlichen Klartexten sich ebenfalls immer unterscheiden.

Nun können Unterschiede zwischen zwei Klartexten je nach Klartext-Paar an verschiedenen Stellen der Klartexte auftreten, die "Neuartigkeit" kann also über die gesamten Klartext-Bitpositionen verteilt sein. Somit lässt sich durch einfaches Umsortieren der jeweiligen Klartext-Bits im allgemeinen Fall kein Klartextformat finden, das maximal wahrscheinliche neuartige erste Klartextblöcke garantiert. Die in den Klartexten enthaltene "Neuartigkeit" lässt sich jedoch sehr gut durch die Anwendung einer kryptographischen Hashfunktion HASH auf eine Folge bestimmter ausgewählter Bits, für die eine Möglichkeit besteht, dass ihre Kombination neuartig ist, akkumulieren. Tritt dabei bei zwei zu zwei verschiedenen Klartexten gehörenden zur Bildung des Hashwertes herangezogenen Bitfolgen BF1 und BF2 ein Unterschied in mindestens einem der Bits auf, so unterscheiden sich mit sehr hoher Wahrscheinlichkeit auch die Hashwerte HashTag1 := HASH(BF1) und HashTag2 := HASH(BF2) der beiden dieses unterschiedliche Bit enthaltenden Bitfolgen.

Der so errechnete Hashwert HashTag := HASH(BF) ließe sich nun direkt als Initialisierungsvektor verwenden oder es ließe sich daraus ein Initialisierungsvektor ableiten, der immer dann neuartig wäre, wenn die in die Berechnung des Hashwertes eingehende Klartext-Bitfolge BF es wäre. Auf diese Weise wird bspw. bei den oben beschriebenen synthetischen Initialisierungsvektoren (SIV) vorgegangen. Das Problem dabei ist, wie oben bereits erklärt, dass der Initialisierungsvektor dem Empfänger bekannt sein muss, damit er den ganz oder teilweise verschlüsselten Klartext entschlüsseln kann. Will man den Initialisierungsvektor nicht explizit als Teil des Klartextes unverschlüsselt übertragen, was aus Gründen der Platzsparsamkeit nicht erwünscht ist, hieße das, dass kein Teil der Bitfolge BF, die zur Bildung des Hashwertes HashTag herangezogen wird, verschlüsselt werden darf, da andernfalls der Empfänger, den vom Sender bei der Verschlüsselung verwendeten Initialisierungsvektor aus dem empfangenen tlw. oder vollständig verschlüsselten Klartext nicht herleiten kann.

Die Aufgabe der hier vorliegenden Erfindung besteht nun darin, ein verbessertes Verfahren zur Verschlüsselung eines in einer Klartext-Nachricht enthaltenen zu verschlüsselnden Klartextes anzugeben, bei welchem trotz der Verwendung von aus dem Klartext abgeleiteten Bitfolgen bei der Verschlüsselung eine hohe Sicherheit erzielt werden kann.

Erfindungsgemäß wird diese Aufgabe durch ein Verfahren mit den Merkmalen im Anspruch 1 gelöst. Vorteilhafte Ausgestaltungen ergeben sich aus den hiervon abhängigen Unteransprüchen.

Das erfindungsgemäße Verfahren dient zur Verschlüsselung $ENCR^{ZF}_{ENCR1,ENCR2}M$ eines in einer Klartext-Nachricht $M_P$ enthaltenen zu verschlüsselnden Klartextes PT, wobei die Klartextnachricht aus diesem zu verschlüsselnden Klartext und einem nicht zu verschlüsselnden zusätzlichen bzw. assoziierten Datenblock AD ("Associated Data") besteht.

Es gilt also:

$$M_P = (PT, AD).$$

Zu diesem Verschlüsselungsverfahren gehört ein Verfahren zur Entschlüsselung $DECR^{ZF}_{DECR1,DECR2}M$ von in einer Chiffretext-Nachricht $M_C$ enthaltenen Chiffretext-Teilen $CT_1$, $CT_2$, wobei die Chiffretext-Nachricht aus diesen zu entschlüsselnden Chiffretext-Teilen und dem nicht verschlüsselten assoziierten Datenblock besteht. In beiden Fällen kann eine als zusätzliche Quelle der Neuartigkeit dienende Neuartigkeitsbitfolge ImplAD ("Implicit Associated Data") mit einbezogen werden.

Erfindungsgemäß ist eine umkehrbare Zerlegungsfunktion ZF vorgesehen, welche einem zu verschlüsselnden Klartext seine Zerlegung $PT_1$, $PT_2$ zuordnet. Unter der Zerlegung wird im hier genutzten Sinn dabei das Ergebnis der Anwendung der Zerlegungsfunktion auf den Klartext verstanden, welche die Klartext-Teile liefert. Ferner ist wenigstens eine Verschlüsselungsfunktion $ENCR_1$, $ENCR_2$ vorgesehen, welche implizit mit geeignetem festem Schlüsselmaterial ausgestattet ist, und welche einen mit der Verschlüsselungsfunktion zu verschlüsselnden Klartext unter Einbeziehung einer variablen Eingangsbitfolge N verschlüsselt, wobei angenommen wird, dass die Eingangsbitfolge als erster Parameter und der zu verschlüsselnde Klartext als zweiter Parameter fungieren. Ferner ist wenigstens eine zu der wenigstens einen Verschlüsselungsfunktion gehörende Entschlüsselungsfunktion $DECR_1$, $DECR_2$ vorgesehen, welche implizit mit geeignetem festem Schlüsselmaterial ausgestattet ist, und welche einen mit der Verschlüsselungsfunktion erzeugten Chiffretext CT unter Einbeziehung derselben variablen Eingangsbitfolge entschlüsselt, wobei angenommen wird, dass die Eingangsbitfolge als erster Parameter und der zu verschlüsselnde Klartext als zweiter Parameter fungieren.

Dabei erfolgt die Verschlüsselung des in der Klartext-Nachricht enthaltenen zu verschlüsselnden Klartextes unter Einbeziehung der Neuartigkeitsbitfolge und liefert zwei Chiffretext-Teile, wobei gilt, dass der erste Chiffretext-Teil mittels der wenigstens einen Verschlüsselungsfunktion aus dem zweiten Klartext-Teil, dem assoziierten Datenblock und der Neuartigkeitsbitfolge in einer beliebigen Reihenfolge konkateniert, als einem ersten Parameter sowie dem ersten Klartext-Teil als einem zweiten Parameter erhältlich ist. Der zweite Chiffretext-Teil ist mittels der wenigstens einen Verschlüsselungsfunktion aus dem ersten Chiffretext-Teil und dem zweiten Klartext-Teil als erstem und zweitem Parameter erhältlich. Die zu der Verschlüsselung gehörende Entschlüsselung liefert aus den in der Chiffretext-Nachricht enthaltenen Chiffretext-Teilen unter Einbeziehung der Neuartigkeitsbitfolge den Klartext zurück, wobei gilt, dass die Klartext-Teile mittels der Entschlüsselung aus dem ersten Chiffretext-Teil, dem zweiten Chiffretext-Teil, dem assoziierten Datenblock sowie der Neuartigkeitsbitfolge erhältlich sind, wobei der zweite Klartext-Teil mittels der wenigstens einen Verschlüsselungsfunktion aus den Chiffretext-Teilen als erstem und zweitem Parameter und der erste Klartext-Teil getrennt davon mittels der wenigstens einen Entschlüsselungsfunktion aus dem zweiten Klartext-Teil, dem assoziierten Datenblock und der Neuartigkeitsbitfolge, in der bei der Verschlüsselung genutzten Reihenfolge konkateniert als erstem Parameter, sowie dem ersten Chiffretext-Teil als zweitem Parameter erhältlich ist.

Dem erfindungsgemäßen Verfahren liegt also der Gedanke zugrunde, eine umkehrbare Zerlegungsfunktion ZF zu verwenden, die jedem zu verschlüsselnden Klartext PT zwei Klartext-Teile $PT_1$, $PT_2$ zuordnet. Es gilt also ZF(PT) = $(PT_1, PT_2)$. Anschließend werden diese Klartext-Teile nicht in einem Schritt, sondern in zwei getrennten Schritten, z.B. nacheinander, verschlüsselt. Da die Zerlegungsfunktion umkehrbar ist, gilt für jeden zu verschlüsselnden Klartext PT = $ZF^{-1}(ZF(PT))$, wobei $ZF^{-1}$ die Umkehrfunktion der Zerlegungsfunktion bezeichnet. Es kann also mit Hilfe der Umkehrfunktion aus den Klartext-Teilen stets der ursprüngliche Klartext auf eine eindeutige Weise hergeleitet werden. Dabei ist es so, dass in dem hier betrachteten Kontext die Zerlegungsfunktion nicht notwendigerweise für alle Bitfolgen definiert sein muss, es genügt, wenn sie für die Menge der - meist mit demselben Schlüssel - zu verschlüsselnden Klartexte definiert ist. Sollen bspw. nur Klartexte, die länger als 20 Byte sind, verschlüsselt werden, so genügt es, wenn die Zerlegungsfunktion nur für Klartexte, die länger als 20 Byte sind, definiert ist.

Man beachte, dass wegen ihrer Umkehrbarkeit jede Zerlegungsfunktion neuartigkeitserhaltend in dem Sinne ist, dass für zwei verschiedene Klartexte PT und PT' deren Zerlegungen ZF(PT) = $(PT_1, PT_2)$ und ZF(PT') = $(PT'_1, PT'_2)$ ebenfalls verschieden sind, also aus PT ≠ PT' stets folgt $PT_1 \neq PT'_1$ oder $PT_2 \neq PT'_2$.

Liegt so eine Zerlegungsfunktion für die Menge der potenziell zu verschlüsselnden Klartexte vor, können von einem der an der Verschlüsselung/Entschlüsselung beteiligten verschlüsselnden Kommunikationspartner, z.B. von einem Sender, statt des ursprünglichen Klartextes PT die in seiner Zerlegung ZF(PT) enthaltenen Klartext-Teile $PT_1$ und $PT_2$ getrennt voneinander, z.B. nacheinander, verschlüsselt und die beiden resultierenden Chiffretext-Teile $CT_1$, $CT_2$ übertragen werden. Beim anderen Kommunikationspartner, hier also dem Empfänger, können nach der Übertragung die Chiffretext-Teile getrennt entschlüsselt werden. Nach der Entschlüsselung der beiden Chiffretext-Teile kann der ursprüngliche Klartext aus den beiden durch Entschlüsselung gewonnenen Klartext-Teilen mit Hilfe der Umkehrfunktion der Zerlegungsfunktion bestimmt werden. Es gilt also: PT = $ZF^{-1}(PT_1, PT_2)$.

Das nacheinander erfolgende Verschlüsseln der in der Zerlegung enthaltenen Klartext-Teile statt des Verschlüsselns des kompletten ursprünglichen Klartextes in einem Schritt hat den Vorteil, dass die jeweiligen in der Zerlegung enthaltenen Klartext-Teile oder aus ihnen neuartigkeitserhaltend erzeugte Bitfolgen, bspw. die Verschlüsselungen der Klartext-Teile, als Initialisierungsvektoren oder zur Erzeugung von Initialisierungsvektoren beim Verschlüsseln des jeweils anderen in der Zerlegung enthaltenen Klartext-Teils genutzt werden können.

Insbesondere können ausgewählte oder alle Bits des zweiten Klartext-Teils als Initialisierungsvektor oder zur Bildung eines Initialisierungsvektors bei der Verschlüsselung des ersten Klartext-Teils genutzt werden. Anschließend kann die auf diese Weise erzeugte Verschlüsselung des ersten Klartext-Teils als Initialisierungsvektor oder zur Bildung des Initialisierungsvektors bei der Verschlüsselung des zweiten Klartext-Teils genutzt werden.

Das Verfahren gemäß der Erfindung ermöglicht es also, bei der symmetrischen Verschlüsselung neuartiger Klartexte auf die Verwendung eines herkömmlichen mit den eingangs beschriebenen Problemen behafteten Initialisierungsvektors ohne nennenswerte Sicherheitseinbußen zu verzichten und den Klartext dabei vollständig zu verschlüsseln.

Im Wesentlichen ist dabei jeweils eine Ver- und eine zugehörige Entschlüsselungsfunktion ausreichend, um die Erfindung umzusetzen, bevorzugt kann es jedoch gemäß einer sehr vorteilhaften Weiterbildung vorgesehen sein, dass jeweils zwei Paare von Verschlüsselungs- und Entschlüsselungsfunktionen eingesetzt werden. Diese können den einzelnen Klartext- bzw. Chiffretext-Teilen zugewiesen werden, z.B. so, dass für zu verschlüsselnden Klartext-Teile

$PT_1$ gilt, dass diese mit der ersten Verschlüsselungsfunktion $ENCR_1$ verschlüsselt werden und die zweiten Klartext-Teile $PT_2$ mit der zweiten Verschlüsselungsfunktion $ENCR_2$. Bei der Entschlüsselung der Chiffretext-Teile $CT_1$, $CT_2$ muss dann auch wieder die entsprechende ersten bzw. zweite Entschlüsselungsfunktion $DECR_1$, $DECR_2$ zum Einsatz kommen.

Die Verschlüsselung $ENCR^{ZF}_{ENCR1,ENCR2}M$ liefert so die Chiffretext-Teile gemäß: $ENCR^{ZF}_{ENCR1,ENCR2}M$ (PT, AD, ImplAD) := ($CT_1$, $CT_2$),

wobei $CT_1$ := $ENCR_1$ ($PT_2 \parallel AD \parallel ImplAD$, $PT_1$) und $CT_2$ := $ENCR_2$ ($CT_1$, $PT_2$) ist,
und wobei ($PT_1$, $PT_2$) die Zerlegung des Klartextes PT mit ZF ist, also ($PT_1$, $PT_2$) := ZF(PT), ist.

Die zu $ENCR^{ZF}_{ENCR1,ENCR2}M$ gehörende Entschlüsselung $DECR^{ZF}_{DECR1,DECR2}M$ von dem in der Chiffretext-Nachricht $M_C$ = ($CT_1$, $CT_2$, AD) enthaltenen Chiffretextpaar ($CT_1$, $CT_2$) unter Einbeziehung von ImplAD, also $DECR_{DECR1,DECR2}M$ ($CT_1$, $CT_2$, AD, ImplAD), ist durch $DECR^{ZF}_{DECR1,DECR2}M$ ($CT_1$, $CT_2$, AD, ImplAD) := PT definiert, wobei $PT_2$ := $DECR_2$ ($CT_1$, $CT_2$), $PT_1$ := $DECR_1$ ($PT_2 \parallel AD \parallel ImplAD$, $CT_1$) und PT := $ZF^{-1}(PT_1, PT_2)$ ist.

Über den nicht zu verschlüsselnden assoziierten Datenblock entsteht eine hohe Flexibilität bei den zu übertragenden Daten, da verschlüsselte und nicht verschlüsselte Datenteile kombiniert werden können. Sollte ferner die Wahrscheinlichkeit für die Neuartigkeit des Klartextes nicht ausreichend sein, kann diese über die Verwendung der Neuartigkeitsbitfolge erhöht werden. Dennoch kann es in vielen Fällen auch ausreichend sein auf diese Teile zu verzichten, so dass gemäß einer sehr vorteilhaften Weiterbildung des Verfahrens gemäß der Erfindung der assoziierte Datenblock und/oder die Neuartigkeitsbitfolge leer vorgegeben werden können.

Eine Zerlegungsfunktion wird im Sinne der hier vorliegenden Erfindung als eine konventionelle Zerlegungsfunktion bezeichnet, falls ein u > 0 existiert, so dass für alle Klartexte PT, die länger als u sind, aus ZF(PT) = ($PT_1$, $PT_2$) stets $L(PT_1) = u$ und PT = $PT_1 \parallel PT_2$ folgt. L(BF) bezeichnet dabei die Bitlänge einer Bitfolge BF. Alle anderen Zerlegungsfunktionen werden dementsprechend nicht-konventionell genannt.

Wie oben beschrieben, kann es, je nach verwendeten Verschlüsselungsverfahren sinnvoll sein, die im Klartext enthaltene Neuartigkeit im ersten Klartext-Teil oder im zweiten Klartext-Teil zu "sammeln". Die Zerlegung des Klartextes wird im erfindungsgemäßen Verfahren durch die Zerlegungsfunktion gesteuert, wobei nicht-konventionelle Zerlegungsfunktionen eine besondere Flexibilität bieten. Gemäß einer sehr vorteilhaften Weiterbildung der Erfindung kann es daher vorgesehen sein, als Zerlegungsfunktion eine nicht-konventionelle Zerlegungsfunktion zu verwenden.

Die nachfolgenden Beispiele für Zerlegungsfunktionen sind allesamt Beispiele solcher nicht-konventioneller Zerlegungsfunktionen. Beispielsweise könnte eine Zerlegungsfunktion nun so gewählt werden, dass der erste Klartext-Teil durch die erste und der zweite Klartext-Teil durch die zweite Hälfte des Klartextes gebildet wird und, falls der Klartext eine ungerade Anzahl von Bits enthält, der erste Klartext-Teil um ein Bit länger als der zweite Klartext-Teil ist. Eine andere Möglichkeit wäre es, dem ersten Klartext-Teil alle geraden und dem zweiten Klartext-Teil alle ungeraden Bits des Klartextes zuzuordnen. Auch wenn es dafür in der Praxis selten sinnvolle Anwendungen geben dürfte, muss die Summe der Längen der beiden Klartext-Teile nicht notwendigerweise gleich der Länge des Klartextes sein. Es könnte bspw. der erste Klartext-Teil durch die ersten zwanzig Byte des Klartextes und der zweite Klartext-Teil durch den ganzen Klartext gebildet werden.

Eine mit geeignetem festem Schlüsselmaterial implizit ausgestattete Verschlüsselungsfunktion, die einen Klartext unter Einbeziehung einer variablen Eingangsbitfolge zu einem Chiffretext verschlüsselt, wird im Sinne der Erfindung als neuartigkeitserhaltend bezeichnet, falls für jeden festen zu verschlüsselnden Klartext die Verwendung verschiedener variabler Eingangsbitfolgen mit einer für die Anwendung ausreichend hohen Wahrscheinlichkeit zu verschiedenen Chiffretexten führt, falls also für jeden zu verschlüsselnden Klartext zwei ungleiche Eingangsbitfolgen, also $N_1 \neq N_2$, für die Anwendung ausreichend sicher zu dem Ergebnis ENCR ($N_1$, PT) $\neq$ ENCR ($N_2$, PT) führen. Die Einschränkung "mit einer für die Anwendung ausreichend hohen Wahrscheinlichkeit" wird hier getroffen, da es sich bei der Eingangsbitfolge N nicht notwendigerweise direkt um einen Initialisierungsvektor handelt, sondern der benötigte Initialisierungsvektor ggf. noch durch Pseudo-Randomisierung (durch bspw. die Anwendung einer kryptografischen Hashfunktion) und/oder Längenanpassung (beides innerhalb von ENCR) gebildet werden muss. Dabei können Kollisionen, also das Erzeugen gleicher Initialisierungsvektoren aus ungleichen Eingangsbitfolgen N, nicht vollständig ausgeschlossen werden.

Bei dem beschriebenen Verfahren ist es von Vorteil, wenn die in den Eingangsbitfolgen enthaltene Neuartigkeit bei der Verschlüsselung der Klartexte durch die Verschlüsselungsfunktionen nicht verlorengeht, sondern so gut wie möglich und so vollständig wie möglich an den jeweiligen Chiffretext weitergegeben wird. Es ist daher gemäß einer sehr günstigen Ausgestaltung der Erfindung vorgesehen, als die wenigstens eine Verschlüsselungsfunktion eine neuartigkeitserhaltende Verschlüsselungsfunktion zu nutzen.

Insbesondere bei zwei Verschlüsselungsfunktionen ist es für die erste Verschlüsselungsfunktion besonders wichtig, da die Verschlüsselung des ersten Klartext-Teils durch die erste Verschlüsselungsfunktion als Eingangsbitfolge in die Verschlüsselung des zweiten Klartext-Teils durch die zweite Verschlüsselungsfunktion eingeht.

Die Zerlegungsfunktion dient also dazu, einen Klartext in zwei getrennt zu verschlüsselnde Klartext-Teile zu zerlegen. Sie sollte so gewählt werden, dass die entstehenden Klartext-Teile zu den verwendeten Verschlüsselungs- bzw. Entschlüsselungsverfahren passen, dass insbesondere die Voraussetzungen für die sichere Anwendung der Verschlüsselungsfunktionen möglichst gut erfüllt sind, indem bspw. die Zerlegungsfunktion so gewählt wird, dass die Wahrscheinlichkeit für die Neuartigkeit des ersten Klartext-Teils für die zu verschlüsselnden Nachrichten mit dem Klartext maximiert wird.

Gemäß einer sehr vorteilhaften Weiterbildung der Erfindung ist es dabei so, dass die Zerlegungsfunktion einmalig festgelegt und in die Verschlüsselung sowie die Entschlüsselung implementiert wird. Somit wird also zwischen der verschlüsselnden Instanz, bspw. dem Sender, und der entschlüsselnden Instanz, bspw. dem Empfänger, eine feste Zerlegungsfunktion, die den obigen Anforderungen am nächsten kommt, vereinbart und anschließend genutzt. Dabei kann die zu nutzende Zerlegungsfunktion für die gesamte Lebensdauer der Systeme fest vorgegeben bzw. vereinbart sein, sie kann gemäß einer alternativen sehr vorteilhaften Ausgestaltung der Erfindung aber auch von Sitzung zu Sitzung oder für mehrere aufeinanderfolgende Sitzungen im Rahmen einer dem eigentlichen Betrieb vorangehenden Abstimmungsphase, einem sogenannten Handshake, zwischen der verschlüsselnden Instanz und der entschlüsselnden Instanz ausgehandelt werden, dabei sollte eine Zerlegungsfunktion gewählt werden, die für die Absicherung der Nachrichten, deren Austausch für die anstehende Sitzung erwartet wird, optimal erscheint.

Eine weitere vorteilhafte Alternative kann es auch vorsehen, ein Verschlüsselungssystem bzw. ein Entschlüsselungssystem mit einem festen Satz von von diesem

Verschlüsselungssystem bzw. diesem Entschlüsselungssystem unterstützten Zerlegungsfunktionen auszustatten. In einem solchen Fall kann dann z.B. während eines Handshakes zwischen einem verschlüsselnden und übertragendenden und einem empfangenden und entschlüsselnden System ausgemacht werden, welche in beiden Systemen verfügbare Zerlegungsfunktion nachfolgend genutzt wird.

Oft ist es jedoch so, dass es nicht bekannt ist, welche Art von Nachrichten während einer Sitzung ausgetauscht werden, d. h., es kann in diesem Fall nur schwer abgeschätzt werden, welche Zerlegungsfunktion für die jeweilige Sitzung am besten geeignet wäre. Insbesondere kann es sinnvoll sein, bei Bedarf bei der Verschlüsselung eines Klartextes eine für diesen speziellen Klartext besonders gut geeignete Zerlegungsfunktion zu wählen. Damit die entschlüsselnde Instanz feststellen kann, welche Zerlegungsfunktion bei der Verschlüsselung des Klartextes genutzt worden ist, muss dieses der entschlüsselnden Instanz mitgeteilt werden. Dies kann erfolgen, indem bspw. die von der entschlüsselnden Instanz unterstützten Zerlegungsfunktionen mit laufenden sowohl der verschlüsselnden als auch der entschlüsselnden Instanz bekannten Nummern versehen werden und der Klartext um die Nummer, der von der verschlüsselnden Instanz genutzten Zerlegungsfunktion, erweitert wird. Erst einmal widerspricht diese Erweiterung dem Ziel, die zu übertragende Nachricht möglichst kurz zu halten. Werden jedoch nur wenige Zerlegungsfunktionen unterstützt, bspw. 16, so genügen wenige Bits, bspw. vier im Falle von 16 möglichen Zerlegungsfunktionen, um die Nummer der bei der Verschlüsselung verwendeten Zerlegungsfunktion zu kodieren.

Es wird vorgeschlagen, alle oder manche Klartexte, um die Nummer der verwendeten Zerlegungsfunktion ZF zu erweitern. Es wird des Weiteren vorgeschlagen, für alle Klartexte PT für die Kodierung der Nummer der verwendeten Zerlegungsfunktion ZF eine feste Position innerhalb des Klartextes PT, bspw. an dessen Anfang oder an dessen Ende, und eine feste Anzahl der für die Kodierung der Nummer verwendeten Bits zwischen der verschlüsselnden Instanz und der entschlüsselnden Instanz zu vereinbaren.

Es kann außerdem vorkommen, dass nicht jeder Klartext PT eine spezielle Zerlegungsfunktion benötigt, sondern dass viele Klartexte PT auch mit einer vorab vereinbarten Default- bzw. Standard-Zerlegungsfunktion ZF sicher verschlüsselt werden können. Für diesen Fall kann es sinnvoll sein, auf die Übertragung der Nummer der verwendeten Zerlegungsfunktion ZF zu verzichten und der verschlüsselnden Instanz stattdessen zu signalisieren, dass für die Entschlüsselung des Klartextes die Default-Zerlegungsfunktion zu nutzen ist. Damit die entschlüsselnde Instanz feststellen kann, ob der empfangene Klartext die Nummer der verwendeten Zerlegungsfunktion ZF enthält oder nicht, muss der Klartext um diese binäre Information, hier Indikator-Bit genannt, erweitert werden.

Es wird daher in einer Weiterbildung der Erfindung vorgeschlagen, jeden Klartext um ein Indikator-Bit, das anzeigt, ob dieser Klartext um die Nummer der genutzten Zerlegungsfunktion ZF erweitert worden ist oder nicht, zu erweitern. Es wird des Weiteren vorgeschlagen, zwischen der verschlüsselnden Instanz und der entschlüsselnden Instanz für alle Klartexte eine Position, an der dieses Indikator-Bit im so erweiterten Klartext steht, zu vereinbaren, bspw. für diese Information das erste oder das letzte Bit des, um dieses Indikator-Bit erweiterten ursprünglichen Klartextes zu nutzen.

Da die Zerlegungsfunktion immer auf Klartexte angewendet wird, können die auf die genutzte Zerlegungsfunktion bezogenen Erweiterungen des ursprünglichen Klartextes, also das Indikator-Bit und/oder die Nummer der genutzten Zerlegungsfunktion, von der verschlüsselnden Instanz mitverschlüsselt werden. Dabei muss berücksichtigt werden, dass bei der Zerlegung des Klartextes durch eine Zerlegungsfunktion sich die Positionen einzelner Bits innerhalb des Klartextes, insbesondere bei Nutzung einer nichtkonventionellen Zerlegungsfunktion, verändern können. Sollen die Zusatzdaten verschlüsselt werden, so kann es sinnvoll sein, ihre Positionen nicht in Bezug auf den ursprünglichen Klartext, sondern in Bezug auf die beiden Klartext-Teile zu vereinbaren, damit die entschlüsselnde Instanz die zu nutzende Zerlegungsfunktion vor deren Anwendung anhand der beiden Klartext-Teile bestimmten kann.

Dabei kann es insbesondere vorgesehen werden, dass in dem erweiterten Klartext enthaltene Indikator-Bit und/oder die in dem erweiterten Klartext enthaltene Nummer der beim Verschlüsseln genutzten Zerlegungsfunktion zusammen mit dem Klartext zu verschlüsseln.

Weitere vorteilhafte Ausgestaltungen und verschiedene Ausführungen des erfindungsgemäßen Verfahrens ergeben sich auch aus den Ausführungsbeispielen, welche nachfolgend unter Bezugnahme auf die Figuren näher erläutert werden.

Dabei zeigen:

Fig. 1 eine schematische Darstellung der Verschlüsselung und Entschlüsselung in einer ersten Ausführungsform; und

Fig. 2 eine schematische Darstellung der Verschlüsselung und Entschlüsselung in einer zweiten Ausführungsform.

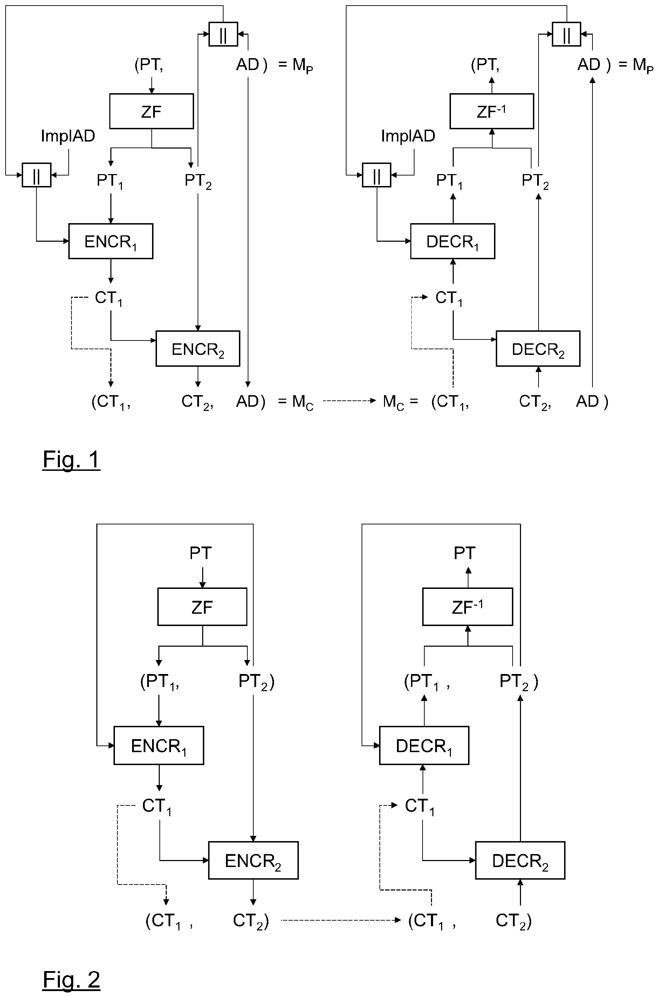

In der Darstellung der Figur 1 ist ein Schema für die Ver- und Entschlüsselung eines Klartextes PT zu erkennen.

Das vorgeschlagene Verschlüsselungsverfahren $ENCR^{ZF}_{ENCR1,ENCR2}M$ erhält eine mehrere Bestandteile enthaltende Klartext-Nachricht $M_P$ sowie weitere Daten als Eingabe und verschlüsselt Teile der Nachricht $M_P$ mit Hilfe der beiden Verschlüsselungsfunktionen $ENCR_1$ und $ENCR_2$. Die nachfolgende Beschreibung des Verschlüsselungsverfahrens $ENCR^{ZF}_{ENCR1,ENCR2}M$ besteht aus einer Beschreibung der Komponenten, die das Verfahren nutzt, einer Beschreibung der Eingabeformate und einer Beschreibung des eigentlichen Verfahrens, das unter Verwendung der Komponenten aus den Bestandteilen der Klartext-Nachricht $M_P$ eine vollständig oder zum Teil verschlüsselte Chiffretext-Nachricht $M_C$ erzeugt.

Komponenten des Verschlüsselungssystems $ENCR^{ZF}_{ENCR1,\ ENCR2}M$:

- Eine umkehrbare Zerlegungsfunktion ZF
- Eine mit geeignetem festem Schlüsselmaterial implizit ausgestattete Verschlüsselungsfunktion $ENCR_1$, die einen zu verschlüsselnden Klartext PT unter Einbeziehung einer variablen Eingangsbitfolge N zu $ENCR_1 (N, PT)$ verschlüsselt
- Eine zweite mit geeignetem festem Schlüsselmaterial implizit ausgestattete Verschlüsselungsfunktion $ENCR_2$, die einen Klartext PT unter Einbeziehung einer variablen Bitfolge N zu $ENCR_2 (N, PT)$ verschlüsselt

Eingabeformate:

- Eine Nachricht $M_P$ bestehend aus einem zu verschlüsselnden Klartext PT und einem assoziierten Datenblock AD ("Associated Data") beliebiger Länge, also $Mp = (PT, AD)$. Der assoziierte Datenblock AD wird nicht verschlüsselt, er trägt aber zur Bildung der Eingangsbitfolge N und damit zur Erhöhung der Wahrscheinlichkeit ihrer Neuartigkeit bei.

    o Soll auf die Verwendung des assoziierten Datenblocks AD verzichtet werden, so kann als AD eine leere Bitfolge gewählt werden.

- Eine implizite Neuartigkeitsbitfolge ImplAD ("Implicit Associated Data") beliebiger Länge, die ebenfalls zur Bildung der Eingangsbitfolge N und damit zur Erhöhung der Wahrscheinlichkeit ihrer Neuartigkeit beiträgt und dem Sender sowie dem Empfänger gleichermaßen bekannt ist und dadurch nicht Teil der Nachricht $M_P$ ist, bspw. ein beiden Seiten bekannter Zähler oder der Hashwert bzw. die Verschlüsselung eines solchen Zählers.

    o Soll auf die Verwendung der Neuartigkeitsbitfolge ImplAD verzichtet werden, so kann als ImplAD die leere Bitfolge gewählt werden.

Im Falle des Verzichts auf den assoziierten Datenblock AD und die Neuartigkeitsbitfolge ImplAD erhält man das in Figur 2 schematisch gezeigte Verfahren, für welches ansonsten das hier beschriebene analog gilt.

Verschlüsselung $ENCR^{ZF}_{ENCR1,\ ENCR2}M$:

- Eingabe:

    1. $M_P = (PT, AD)$
    2. ImplAD

- Bestimmung der Ausgabe:

    1. $(PT_1, PT_2) := ZF(PT)$

2. $CT_1 := ENCR_1 (PT_2 \parallel AD \parallel ImplAD, PT_1)$
3. $CT_2 := ENCR_2 (CT_1, PT_2)$

- Ausgabe:

  1. $CT_1, CT_2$, es gilt dann
  $M_C := (CT_1, CT_2, AD)$

Zusammenfassend wird also vorgeschlagen, die Verschlüsselung des Klartextes PT einer aus PT, AD bestehenden Klartext-Nachricht Mp = (PT, AD) wie folgt zu bestimmen: $ENCR^{ZF}_{ENCR1,ENCR2}{}^M (PT, AD, ImplAD) := (CT_1, ENCR_2 (CT_1, PT_2))$ mit $(PT_1, PT_2) := ZF(PT)$ und

$$CT_1 := ENCR_1 (PT_2 \parallel AD \parallel ImplAD, PT_1)$$

Das vorgeschlagene Entschlüsselungsverfahren $DECR^{ZF}_{DECR1,DECR2}{}^M$ erhält eine aus mehreren teilweise verschlüsselten Bestandteilen bestehende Chiffretext-Nachricht $M_C$ sowie weitere Daten als Eingabe und entschlüsselt die verschlüsselten Teile der Nachricht $M_C$ mit Hilfe der beiden Entschlüsselungsfunktionen $DECR_1$ und $DECR_2$. Die nachfolgende Beschreibung des Entschlüsselungsverfahrens $DECR^{ZF}_{DECR1,DECR2}{}^M$ besteht aus einer Beschreibung der Komponenten, die das Verfahren nutzt, einer Beschreibung der Eingabeformate und einer Beschreibung des eigentlichen Verfahrens, das unter Verwendung der Komponenten aus den Bestandteilen der teilweise verschlüsselten Chiffretext-Nachricht $M_C$ den Klartextanteil der ursprünglichen Nachricht $M_P$ erzeugt.

Komponenten des Endschlüsselungssystems $DECR^{ZF}DECR1,DECR2^M$:

- Die Umkehrfunktion $ZF^{-1}$ der bei der Verschlüsselung verwendeten umkehrbaren Zerlegungsfunktion ZF
- Die zu $ENCR_1$ gehörende mit geeignetem festem Schlüsselmaterial implizit ausgestattete Entschlüsselungsfunktion $DECR_1$, die einen Chiffretext CT unter Einbeziehung einer variablen Eingangsbitfolge N zu $DECR_1 (N, CT)$ entschlüsselt, so dass für alle mit $ENCR_1$ zu verschlüsselnden Klartexte PT gilt:
  $DECR_1 (N, ENCR_1 (N, PT)) = PT$
- Die zu $ENCR_2$ gehörende mit geeignetem festem Schlüsselmaterial implizit ausgestattete Entschlüsselungsfunktion $DECR_2$, die einen Chiffretext CT unter Einbeziehung einer variablen Eingangsbitfolge N zu $DECR_2 (N, CT)$ entschlüsselt, so dass für alle mit $ENCR_2$ zu verschlüsselnden Klartexte PT gilt: $DECR_2 (N, ENCR_2 (N, PT)) = PT$

Eingabeformate:

- Eine Nachricht $M_C$ bestehend aus zwei Chiffretexten $CT_1$ und $CT_2$ und einem nicht verschlüsselten assoziierten Datenblock AD, also $M_C = (CT_1, CT_2, AD)$.
- ImplAD, wie bei der Verschlüsselung

Entschlüsselung $DECR^{ZF}_{DECR1,DECR2}{}^M$:

- Eingabe:

  1. $M_C = (CT_1, CT_2, AD)$
  2. ImplAD

- Bestimmung der Ausgabe:

  1. $PT_2 := DECR_2 (CT_1, CT_2)$
  2. $PT_1 := DECR_1 (PT_2 \parallel AD \parallel ImplAD, CT_1)$
  3. $PT := ZF^{-1} (PT_1, PT_2)$

- Ausgabe:

  1. PT, es gilt dann $M_P := (PT, AD)$

Zusammenfassend wird vorgeschlagen, die Entschlüsselung der verschlüsselten Chiffretext-Teile ($CT_1$, $CT_2$) einer aus $CT_1$, $CT_2$, AD bestehenden Chiffretext-Nachricht $M_C = (CT_1, CT_2, AD)$ wie folgt zu bestimmen:

$$DECR^{ZF}_{DECR1,DECR2}M\ (CT_1, CT_2, AD, ImplAD) := ZF^{-1}(DECR_1(PT_2 \| AD \| ImplAD, CT_1), PT_2)$$

mit $PT_2 := DECR_2\ (CT_1, CT_2)$

**Patentansprüche**

1.    Verfahren zur Verschlüsselung ($ENCR^{ZF}_{ENCR1,ENCR2}M$) eines in einer Klartext-Nachricht ($M_P$) enthaltenen zu verschlüsselnden Klartextes (PT), wobei die Klartext-Nachricht ($M_P$) aus diesem zu verschlüsselnden Klartext (PT) und einem nicht zu verschlüsselnden assoziierten Datenblock (AD) besteht, sowie ein dazugehöriges Verfahren zur Entschlüsselung ($DECR^{ZF}_{DECR1,DECR2}M$) von in einer Chiffretext-Nachricht ($M_C$) enthaltenen Chiffretext-Teilen ($CT_1$, $CT_2$), wobei die Chiffretext-Nachricht ($M_C$) aus den Chiffretext-Teilen ($CT_1$, $CT_2$) und dem nicht verschlüsselten assoziierten Datenblock (AD) besteht,

jeweils unter Einbeziehung einer als zusätzliche Quelle der Neuartigkeit dienenden impliziten Neuartigkeitsbitfolge (ImplAD),
**dadurch gekennzeichnet, dass**
eine umkehrbare Zerlegungsfunktion (ZF) vorgesehen ist, die dem zu verschlüsselnden Klartext (PT) seine Zerlegung in zwei Klartext-Teile ($PT_1$, $PT_2$) zuordnet, dass wenigstens eine Verschlüsselungsfunktion ($ENCR_1$, $ENCR_2$) implizit mit geeignetem festem Schlüsselmaterial ausgestattet ist, welche einen mit der Verschlüsselungsfunktion ($ENCR_1$, $ENCR_2$) zu verschlüsselnden Klartext (PT) unter Einbeziehung einer variablen Eingangsbitfolge (N) verschlüsselt, dass wenigstens eine zu der wenigstens einen Verschlüsselungsfunktion ($ENCR_1$, $ENCR_2$) gehörende Entschlüsselungsfunktion ($DECR_1$, $DECR_2$) implizit mit geeignetem festem Schlüsselmaterial ausgestattet ist, welche einen mit der Verschlüsselungsfunktion ($ENCR_1$, $ENCR_2$) generierten Chiffretext (CT) unter Einbeziehung der selben variablen Eingangsbitfolge (N) entschlüsselt, wobei die Verschlüsselung ($ENCR^{ZF}_{ENCR1,ENCR2}M$) des in der Klartext-Nachricht (Mp) enthaltenen zu verschlüsselnden Klartextes (PT) unter Einbeziehung der Neuartigkeitsbitfolge (ImplAD) erfolgt und zwei Chiffretext-Teile ($CT_1$, $CT_2$) liefert, wobei gilt, dass der erste Chiffretext-Teil ($CT_1$) mittels der wenigstens einen Verschlüsselungsfunktion ($ENCR_1$, $ENCR_2$) aus dem zweiten Klartext-Teil ($PT_2$), dem assoziierten Datenblock(AD) und der Neuartigkeitsbitfolge (ImplAD), in einer beliebigen Reihenfolge konkateniert, als erstem Parameter sowie dem ersten Klartext-Teil ($PT_1$) als zweitem Parameter erhältlich ist, und dass der zweite Chiffretext-Teil ($CT_2$) mittels der wenigstens einen Verschlüsselungsfunktion ($ENCR_1$, $ENCR_2$) aus dem ersten Chiffretext-Teil ($CT_1$) als erstem Parameter und dem zweiten Klartext-Teil ($PT_2$) als zweitem Parameter erhältlich ist, und dass die zur Verschlüsselung ($ENCR^{ZF}_{ENCR1,ENCR2}M$) gehörende Entschlüsselung ($DECR^{ZF}DECR1,DECR2M$) von den in der Chiffretext-Nachricht ($M_C$) enthaltenen Chiffretext-Teilen ($CT_1$, $CT_2$) unter Einbeziehung der Neuartigkeitsbitfolge (ImplAD) erfolgt und den Klartext (PT) zurückliefert, wobei gilt, dass die Klartext-Teile ($PT_1$, $PT_2$) mittels der Entschlüsselung ($DECR^{ZF}_{DECR1,DECR2}M$) aus dem ersten Chiffretext-Teil ($CT_1$), dem zweiten Chiffretext-Teil ($CT_2$), dem assoziierten Datenblock (AD) sowie der Neuartigkeitsbitfolge (ImplAD) erhältlich sind, wobei der zweite Klartext-Teil ($PT_2$) mittels der wenigstens einen Entschlüsselungsfunktion ($DECR_1$, $DECR_2$) aus den Chiffretext-Teilen ($CT_1$, $CT_2$) als erstem und zweitem Parameter und der erste Klartext-Teil ($PT_1$) getrennt davon mittels der wenigstens einen Entschlüsselungsfunktion ($DECR_1$, $DECR_2$) aus dem zweiten Klartext-Teil ($PT_2$), dem assoziierten Datenblock (AD) und der Neuartigkeitsbitfolge (ImplAD), in der bei der Verschlüsselung genutzten Reihenfolge konkateniert, als erstem Parameter, sowie dem ersten Chiffretext-Teil ($CT_1$) als zweitem Parameter, erhältlich ist, wonach der Klartext (PT) aus den beiden Klartext-Teilen ($PT_1$, $PT_2$) durch eine Umkehrung ($ZF^{-1}$) der Zerlegungsfunktion (ZF) erhältlich ist.

2.    Verfahren nach Anspruch 1,
**dadurch gekennzeichnet, dass**

jeweils zwei Verschlüsselungs- und Entschlüsselungsfunktionen ($ENCR_1$, $ENCR_2$, $DECR_1$, $DECR_2$) eingesetzt werden, wobei
die erste und die zweite Verschlüsselungsfunktion ($ENCR_1$, $ENCR_2$) implizit jeweils mit geeignetem festem Schlüsselmaterial ausgestattet sind, welche einen mit der jeweiligen Verschlüsselungsfunktion ($ENCR_1$, $ENCR_2$) zu verschlüsselnden Klartext (PT) unter Einbeziehung einer variablen Eingangsbitfolge (N) verschlüsseln, wobei eine erste und eine zweite zu der jeweiligen ersten und zweiten Verschlüsselungsfunktion ($ENCR_1$, $ENCR_2$) gehörende Entschlüsselungsfunktion ($DECR_1$, $DECR_2$) implizit mit geeignetem festem Schlüsselmaterial ausgestattet sind, welche einen mit der jeweiligen Verschlüsselungsfunktion ($ENCR_1$, $ENCR_2$) generierten Chiffretext (CT) unter Einbeziehung einer variablen Eingangsbitfolge (N) entschlüsseln, und wobei die Verschlüsselung ($ENCR^{ZF}_{ENCR1,ENCR2}M$) des in der Klartext-Nachricht ($M_P$) enthaltenen zu verschlüsselnden Klartextes (PT) unter Einbeziehung der Neuartigkeitsbitfolge (ImplAD) erfolgt und zwei Chiffretext-Teile ($CT_1$, $CT_2$) liefert, wobei gilt, dass

der erste Chiffretext-Teil ($CT_1$) mittels der ersten Verschlüsselungsfunktion ($ENCR_1$) aus dem zweiten Klartext-Teil ($PT_2$), dem assoziierten Datenblock (AD) und der Neuartigkeitsbitfolge (ImplAD), in einer beliebigen Reihenfolge konkateniert, als dem ersten Parameter sowie dem ersten Klartext-Teil ($PT_1$) als dem zweiten Parameter, erhältlich ist, und dass

der zweite Chiffretext-Teil ($CT_2$) mittels der zweiten Verschlüsselungsfunktion ($ENCR_2$) aus dem ersten Chiffretext-Teil ($CT_1$) und dem zweiten Klartext-Teil ($PT_2$), als erstem und zweiten Parameter, erhältlich ist, und dass die zur Verschlüsselung ($ENCR^{ZF}_{ENCR1,ENCR2}M$) gehörende Entschlüsselung ($DECR^{ZF}_{DECR1,DECR2}M$) von den in der Chiffretext-Nachricht ($M_C$) enthaltenen Chiffretext-Teilen ($CT_1$, $CT_2$) unter Einbeziehung der Neuartigkeitsbitfolge (ImplAD) erfolgt und den Klartext (PT) zurückliefert, wobei gilt, dass die Klartext-Teile ($PT_1$, $PT_2$) mittels der Entschlüsselung ($DECR^{ZF}_{DECR1,DECR2}M$) aus dem ersten Chiffretext-Teil ($CT_1$), dem zweiten Chiffretext-Teil ($CT_2$), dem assoziierten Datenblock (AD) sowie der Neuartigkeitsbitfolge (ImplAD) erhältlich sind, wobei der zweite Klartext-Teil ($PT_2$) mittels der zweiten Entschlüsselungsfunktion ($DECR_2$) aus den Chiffretext-Teilen ($CT_1$, $CT_2$) als erstem und zweitem Parameter und der erste Klartext-Teil ($PT_1$) mittels der ersten Entschlüsselungsfunktion ($DECR_1$) aus dem zweiten Klartext-Teil ($PT_2$), dem assoziierten Datenblock (AD) und der Neuartigkeitsbitfolge (ImplAD) in der bei der Verschlüsselung genutzten Reihenfolge konkateniert, als erstem Parameter, sowie dem ersten Chiffretext-Teil ($CT_1$) als zweitem Parameter, erhältlich ist.

3. Verfahren nach Anspruch 1 oder 2,
**dadurch gekennzeichnet, dass**
der assoziierte Datenblock (AD) und/oder die Neuartigkeitsbitfolge (ImplAD) leer vorgegeben werden.

4. Verfahren nach Anspruch 1, 2 oder 3,
**dadurch gekennzeichnet, dass**
als Zerlegungsfunktion (ZF) eine nicht-konventionelle Zerlegungsfunktion (ZF) verwendet wird.

5. Verfahren nach einem der Ansprüche 1 bis 4,
**dadurch gekennzeichnet, dass**
als die wenigstens eine Verschlüsselungsfunktion ($ENCR_1$, $ENCR_2$) eine neuartigkeitserhaltende Verschlüsselungsfunktion verwendet wird.

6. Verfahren nach einem der Ansprüche 1 bis 5,
**dadurch gekennzeichnet, dass**
die Zerlegungsfunktion (ZF) einmalig festgelegt und in die Verschlüsselung ($ENCR^{ZF}_{ENCR1,ENCR2}M$) sowie die Entschlüsselung ($DECR^{ZF}_{DECR1,DECR2}M$) implementiert wird.

7. Verfahren nach einem der Ansprüche 1 bis 5,
**dadurch gekennzeichnet, dass**
die Zerlegungsfunktion (ZF) für eine oder mehrere aufeinanderfolgende Sitzungen zweier Kommunikationspartner mit der Verschlüsselung ($ENCR^{ZF}_{ENCR1,ENCR2}M$) und der Entschlüsselung ($DECR^{ZF}_{DECR1,DECR2}M$) zwischen den Kommunikationspartnern vereinbart wird.

8. Verfahren nach einem der Ansprüche 1 bis 5,
**dadurch gekennzeichnet, dass**
die Zerlegungsfunktion (ZF) als Satz von Zerlegungsfunktionen (ZF) festgelegt und in die Verschlüsselung ($ENCR^{ZF}_{ENCR1,ENCR2}M$) sowie die Entschlüsselung ($DECR^{ZF}_{DECR1,DECR2}M$) implementiert wird.

9. Verfahren nach Anspruch 8,
**dadurch gekennzeichnet, dass**
die einzelnen Zerlegungsfunktionen in dem Satz von Zerlegungsfunktionen (ZF) zur Identifikation mit einer Nummer durchnummeriert sind.

10. Verfahren nach Anspruch 9,
**dadurch gekennzeichnet, dass**
die Nummer der zum Verschlüsseln verwendeten und zur Entschlüsselung benötigten Zerlegungsfunktion (ZF) in den zu verschlüsselnden Klartext (PT) integriert wird.

11. Verfahren nach Anspruch 10,
**dadurch gekennzeichnet, dass**
die Nummer an einer zuvor festgelegten Position innerhalb des Klartextes (PT) oder innerhalb eines oder beider Klartext-Teile ($PT_1$, $PT_2$) angeordnet wird.

12. Verfahren nach Anspruch 9, 10 oder 11,
**dadurch gekennzeichnet, dass**
der Klartext (PT) um ein Indikations-Bit erweitert wird, welches anzeigt, ob die Nummer der Zerlegungsfunktion (ZF) in dem Klartext (PT) oder einem der Klartext-Teile ($PT_1$, $PT_2$) enthalten ist oder nicht.

13. Verfahren nach Anspruch 12,
**dadurch gekennzeichnet, dass**
das Indikations-Bit an einer zuvor festgelegten Position innerhalb des Klartextes (PT) oder innerhalb eines oder beider Klartext-Teile ($PT_1$, $PT_2$) angeordnet wird.

14. Verfahren nach einem der Ansprüche 9 bis 13,
**dadurch gekennzeichnet, dass**
bei nicht vorhandener Nummer eine Standard-Zerlegungsfunktion (ZF) verwendet wird.

**Claims**

1. Method for encrypting ($ENCR^{ZF}_{ENCR1,ENCR2}M$) plain text (PT) contained in a plain text message ($M_P$) and to be encrypted, wherein the plain text message ($M_P$) consists of this plain text (PT) to be encrypted and an associated data block (AD) which is not to be encrypted, as well as an associated method for decrypting ($DECR^{ZF}_{OECR1,OECR2}M$) ciphertext parts ($CT_1$, $CT_2$) contained in a ciphertext message (Mc), wherein the ciphertext message ($M_C$) consists of the ciphertext parts ($CT_1$, $CT_2$) and the non-encrypted associated data block (AD),

each incorporating an implicit original bit sequence (ImplAD) which serves as an additional source of originality, **characterized in that**
a reversible decomposition function (ZF) is provided, which assigns the plain text (PT) to be encrypted its decomposition into two plain text parts ($PT_1$, $PT_2$), **in that**
at least one encryption function ($ENCR_1$, $ENCR_2$) is implicitly equipped with suitable fixed key material which encrypts plain text (PT) to be encrypted using the encryption function ($ENCR_1$, $ENCR_2$) by incorporating a variable input bit sequence (N), **in that** at least one decryption function ($DECR_1$, $DECR_2$) associated with the at least one encryption function ($ENCR_1$, $ENCR_2$) is implicitly equipped with suitable fixed key material which decrypts ciphertext (CT) generated using the encryption function ($ENCR_1$, $ENCR_2$) by incorporating the same variable input bit sequence (N), wherein the encryption ($ENCR^{ZF}_{ENCR1,ENCR2}M$) of the plain text (PT) contained in the plain text message ($M_P$) and to be encrypted is carried out by incorporating the originality bit sequence (ImplAD) and provides two ciphertext parts ($CT_1$, $CT_2$), wherein it is true that
the first ciphertext part ($CT_1$) can be obtained, by means of the at least one encryption function ($ENCR_1$, $ENCR_2$), as a first parameter from the second plain text part ($PT_2$), the associated data block (AD) and the originality bit sequence (ImplAD), concatenated in any order, and from the first plain text part ($PT_1$) as a second parameter, and that the second ciphertext part ($CT_2$) can be obtained, by means of the at least one encryption function ($ENCR_1$, $ENCR_2$), as a first parameter from the first ciphertext part ($CT_1$) and from the second plain text part ($PT_2$) as a second parameter, and **in that**
the decryption ($DECR^{ZF}_{DECR1,DECR2}M$), associated with the encryption ($ENCR^{ZF}_{ENCR1,ENCR2}M$), of the ciphertext parts ($CT_1$, $CT_2$) contained in the ciphertext message ($M_C$) is carried out by incorporating the originality bit sequence (ImplAD) and provides the plain text (PT) again, wherein it is true that
the plain text parts ($PT_1$, $PT_2$) can be obtained, by means of the decryption ($DECR^{ZF}_{DECR1,DECR2}m$), from the first ciphertext part ($CT_1$), the second ciphertext part ($CT_2$), the associated data block (AD) and the originality bit

sequence (ImplAD), wherein the second plain text part ($PT_2$) can be obtained, by means of the at least one decryption function ($DECR_1$, $DECR_2$), as a first and second parameter from the ciphertext parts ($CT_1$, $CT_2$) and the first plain text part ($PT_1$) can be obtained separately therefrom, by means of the at least one decryption function ($DECR_1$, $DECR_2$), as a first parameter from the second plain text part ($PT_2$), the associated data block (AD) and the originality bit sequence (ImplAD), concatenated in the order used during encryption, and as a second parameter from the first ciphertext part ($CT_1$), after which
the plain text (PT) can be obtained from the two plain text parts ($PT_1$, $PT_2$) by reversing ($ZF^{-1}$) the decomposition function (ZF).

2. Method according to claim 1,
   **characterized in that**

   in each case two encryption and decryption functions ($ENCR_1$, $ENCR_2$, $DECR_1$, $DECR_2$) are used, wherein the first and the second encryption function ($ENCR_1$, $ENCR_2$) are each implicitly equipped with suitable fixed key material which encrypt plain text (PT) to be encrypted using the relevant encryption function ($ENCR_1$, $ENCR_2$) by incorporating a variable input bit sequence (N), wherein a first and a second decryption function ($DECR_1$, $DECR_2$) associated with the relevant first and second encryption function ($ENCR_1$, $ENCR_2$) are implicitly equipped with suitable fixed key material which decrypt ciphertext (CT) generated using the relevant encryption function ($ENCR_1$, $ENCR_2$) by incorporating a variable input bit sequence (N), and wherein
   the encryption ($ENCR^{ZF}_{ENCR1,ENCR2}M$) of the plain text (PT) contained in the plain text message ($M_P$) and to be encrypted is carried out by incorporating the originality bit sequence (ImplAD) and provides two ciphertext parts ($CT_1$, $CT_2$), wherein it is true that
   the first ciphertext part ($CT_1$) can be obtained, by means of the first encryption function ($ENCR_1$), as the first parameter from the second plain text part ($PT_2$), the associated data block (AD) and the originality bit sequence (ImplAD), concatenated in any order, and as the second parameter from the first plain text part ($PT_1$), and that
   the second ciphertext part ($CT_2$) can be obtained, by means of the second encryption function ($ENCR_2$), as the first and second parameter from the first ciphertext part ($CT_1$) and the second plain text part ($PT_2$), and **in that**
   the decryption ($DECR^{ZF}_{DECR1,DECR2}M$), associated with the encryption ($ENCR^{ZF}_{ENCR1,ENCR2}M$), of the cipher-text parts ($CT_1$, $CT_2$) contained in the ciphertext message ($M_C$) is carried out by incorporating the originality bit sequence (ImplAD) and provides the plain text (PT) again, wherein it is true that
   the plain text parts ($PT_1$, $PT_2$) can be obtained, by means of decryption ($DECR^{ZF}_{DECR1,DECR2}M$), from the first ciphertext part ($CT_1$), the second ciphertext part ($CT_2$), the associated data block (AD) and the originality bit sequence (ImplAD), wherein the second plain text part ($PT_2$) can be obtained, by means of the second decryption function ($DECR_2$), as the first and second parameter from the ciphertext parts ($CT_1$, $CT_2$) and the first plain text part ($PT_1$) can be obtained, by means of the first decryption function ($DECR_1$), as the first parameter from the second plain text part ($PT_2$), the associated data block (AD) and the originality bit sequence (ImplAD), concatenated in the order used during encryption, and as the second parameter from the first ciphertext part ($CT_1$).

3. Method according to claim 1 or claim 2,
   **characterized in that**
   the associated data block (AD) and/or the originality bit sequence (ImplAD) are specified as empty.

4. Method according to claim 1, claim 2 or claim 3,
   **characterized in that**
   a non-conventional decomposition function (ZF) is used as the decomposition function (ZF).

5. Method according to any of claims 1 to 4,
   **characterized in that**
   the originality-preserving encryption function is used as the at least one encryption function ($ENCR_1$, $ENCR_2$).

6. Method according to any of claims 1 to 5,
   **characterized in that**
   the decomposition function (ZF) is defined once and implemented in the encryption ($ENCR^{ZF}_{ENCR1,ENCR2}M$) and decryption ($DECR^{ZF}_{OECR1,OECR2}M$).

7. Method according to any of claims 1 to 5,
   **characterized in that**

the decomposition function (ZF) for one or more consecutive sessions between two communication partners using the encryption (ENCR$^{ZF}_{ENCR1,ENCR2}$M) and decryption (DECR$^{ZF}_{DECR1,DECR2}$M) is agreed between the communication partners.

8. Method according to any of claims 1 to 5,
**characterized in that**
the decomposition function (ZF) is defined as a set of decomposition functions (ZF) and is implemented in the encryption (ENCR$^{ZF}_{ENCR1,ENCR2}$M) and the decryption (DECR$^{ZF}_{OECR1,OECR2}$M).

9. Method according to claim 8,
**characterized in that**
the individual decomposition functions in the set of decomposition functions (ZF) are numbered for identification.

10. Method according to claim 9,
**characterized in that**
the number of the decomposition function (ZF) used for encryption and required for decryption is integrated into the plain text (PT) to be encrypted.

11. Method according to claim 10,
**characterized in that**
the number is arranged at a predefined position within the plain text (PT) or within one or both plain text parts (PT$_1$, PT$_2$).

12. Method according to claim 9, claim 10 or claim 11,
**characterized in that**
the plain text (PT) is extended by an indication bit which indicates whether or not the number of the decomposition function (ZF) is contained in the plain text (PT) or one of the plain text parts (PT$_1$, PT$_2$).

13. Method according to claim 12,
**characterized in that**
the indication bit is arranged at a predefined position within the plain text (PT) or within one or both plain text parts (PT$_1$, PT$_2$).

14. Method according to any of claims 9 to 13,
**characterized in that**
a standard decomposition function (ZF) is used in the absence of a number.

**Revendications**

1. Procédé pour le cryptage (ENCR$^{ZF}_{ENCR1,ENCR2}$M) d'un texte clair (PT) à crypter contenu dans un message en texte clair (M$_P$), dans lequel le message en texte clair (M$_P$) est constitué dudit texte clair (PT) à crypter et d'un bloc de données associé (AD) à ne pas crypter, ainsi qu'un procédé associé pour le décryptage (DECR$^{ZF}_{DECR1,DECR2}$M) de parties de texte crypté (CT$_1$, CT$_2$) contenues dans un message en texte crypté (Mc), dans lequel le message en texte crypté (Mc) est constitué des parties de texte crypté (CT$_1$, CT$_2$) et du bloc de données associé (AD) non crypté,

respectivement en incluant une séquence de bits de nouveauté implicite (ImplAD) servant de source supplémentaire de nouveauté,
**caractérisé en ce que**
une fonction de décomposition (ZF) réversible est prévue, laquelle associe au texte clair (PT) à crypter sa décomposition en deux parties de texte clair (PT$_1$, PT$_2$), **en ce que**
au moins une fonction de cryptage (ENCR$_1$, ENCR$_2$) est implicitement équipée d'un matériau de cryptage fixe approprié qui crypte un texte clair (PT) à crypter avec la fonction de cryptage (ENCR$_1$, ENCR$_2$) en incluant une séquence de bits d'entrée variable (N), **en ce qu'**au moins une fonction de décryptage (DECR$_1$, DECR$_2$) appartenant à l'au moins une fonction de cryptage (ENCR$_1$, ENCR$_2$) est implicitement équipée d'un matériau de cryptage fixe approprié qui décrypte un texte crypté (CT) généré par la fonction de cryptage (ENCR$_1$, ENCR$_2$) en incluant la même séquence de bits d'entrée variable (N), dans lequel le cryptage (ENCR$^{ZF}_{ENCR1,ENCR2}$M) du texte clair (PT) à crypter contenu dans le message en texte clair (M$_P$) est effectué en incluant la séquence de bits de nouveauté (ImplAD) et fournit deux parties de texte crypté (CT$_1$, CT$_2$), dans lequel il est entendu que la première partie de texte crypté (CT$_1$) peut être obtenue au moyen de l'au moins une fonction de cryptage (ENCR$_1$, ENCR$_2$) à partir de la seconde partie de texte clair (PT$_2$), du bloc de données associé (AD) et de la séquence de bits de nouveauté (ImplAD), concaténés dans un ordre quelconque, en tant que première paramètre ainsi que de la première partie de texte clair (PT$_1$) en tant que second paramètre, et **en ce que** la seconde partie de texte crypté (CT$_2$) peut être obtenue au moyen de l'au moins une fonction de cryptage (ENCR$_1$, ENCR$_2$) à partir de la première partie de texte crypté (CT$_1$) en tant que premier paramètre et de la seconde partie de texte clair (PT$_2$) en tant que second paramètre, et **en ce que** le décryptage (DECR$^{ZF}_{DECR1,DECR2}$M) associé au cryptage (ENCR$^{ZF}_{ENCR1,ENCR2}$M) des parties de texte crypté (CT$_1$, CT$_2$) contenues dans le message en texte crypté (M$_C$) est effectué en incluant la séquence de bits de nouveauté (ImplAD) et renvoie le texte clair (PT), dans lequel il est entendu que les parties de texte clair (PT$_1$, PT$_2$) peuvent être obtenues au moyen du décryptage (DECR$^{ZF}_{DECR1,DECR2}$M) à partir de la première partie de texte crypté (CT$_1$), de la seconde partie de texte crypté (CT$_2$), du bloc de données associé (AD) ainsi que de la séquence de bits de nouveauté (ImplAD), dans lequel la seconde partie de texte clair (PT$_2$) peut être obtenue au moyen de l'au moins une fonction de décryptage (DECR$_1$, DECR$_2$) à partir des parties de texte crypté (CT$_1$, CT$_2$) en tant que premier et second paramètres et la première partie de texte clair (PT$_1$) peut être obtenue séparément de celle-ci au moyen de l'au moins une fonction de décryptage (DECR$_1$, DECR$_2$) à partir de la seconde partie de texte clair (PT$_2$), du bloc de données associé (AD) et de la séquence de bits de nouveauté (ImplAD), concaténés dans l'ordre utilisé lors du cryptage, en tant que premier paramètre, ainsi que de la première partie de texte crypté (CT$_1$) en tant que second paramètre, moyennant quoi le texte clair (PT) peut être obtenu à partir des deux parties de texte clair (PT$_1$, PT$_2$) par une inversion (ZF$^{-1}$) de la fonction de décomposition (ZF).

2. Procédé selon la revendication 1,
**caractérisé en ce que**

respectivement deux fonctions de cryptage et de décryptage (ENCR$_1$, ENCR$_2$, DECR$_1$, DECR$_2$) sont utilisées, dans lequel la première et la seconde fonction de cryptage (ENCR$_1$, ENCR$_2$) sont implicitement respectivement équipées d'un matériau de cryptage fixe approprié qui crypte un texte clair (PT) à crypter avec la fonction de cryptage (ENCR$_1$, ENCR$_2$) respective en incluant une séquence de bits d'entrée variable (N), dans lequel une première et une seconde fonction de décryptage (DECR$_1$, DECR$_2$) associées aux première et seconde fonctions de cryptage (ENCR$_1$, ENCR$_2$) respectives sont implicitement équipées d'un matériau de cryptage fixe approprié qui décrypte un texte crypté (CT) généré par la fonction de cryptage (ENCR$_1$, ENCR$_2$) respective en incluant une séquence de bits d'entrée variable (N), et dans lequel le cryptage (ENCR$^{ZF}_{ENCR1,ENCR2}$M) du texte clair (PT) à crypter contenu dans le message en texte clair (M$_P$) est effectué en incluant la séquence de bits de nouveauté (ImplAD) et fournit deux parties de texte crypté (CT$_1$, CT$_2$), dans lequel il est entendu que la première partie de texte crypté (CT$_1$) peut être obtenue au moyen de la première fonction de cryptage (ENCR$_1$) à partir de la seconde partie de texte clair (PT$_2$), du bloc de données associé (AD) et de la séquence de bits de nouveauté (ImplAD), concaténés dans un ordre quelconque, en tant que premier paramètre ainsi que de la première partie de texte clair (PT$_1$) en tant que second paramètre, et **en ce que** la seconde partie de texte crypté (CT$_2$) peut être obtenue au moyen de la seconde fonction de cryptage (ENCR$_2$) à partir de la première partie de texte crypté (CT$_1$) et de la seconde partie de texte clair (PT$_2$), en tant que premier et second paramètres, et **en ce que** le décryptage (DECR$^{ZF}_{DECR1,DECR2}$M) associé au cryptage (ENCR$^{ZF}_{ENCR1,ENCR2}$M) des parties de texte crypté (CT$_1$, CT$_2$) contenues dans le message en texte crypté (M$_C$) est effectué en incluant la séquence de bits de nouveauté (ImplAD) et renvoie le texte clair (PT), dans lequel il est entendu que les parties de texte clair (PT$_1$, PT$_2$) peuvent être obtenues au moyen du décryptage (DECR$^{ZF}_{DECR1,DECR2}$M) à partir de la première partie de texte crypté (CT$_1$), de la seconde partie de texte crypté (CT$_2$), du bloc de données associé (AD) ainsi que de la séquence de bits de nouveauté (ImplAD), dans lequel la seconde partie de texte clair (PT$_2$) est obtenue au moyen de la seconde fonction de décryptage (DECR$_2$) à partir des parties de texte crypté (CT$_1$, CT$_2$) en tant que premier et second paramètres et la première partie de texte clair (PT$_1$) peut être obtenue au moyen de la première fonction de décryptage (DECR$_1$) à partir de la seconde partie de texte clair (PT$_2$), du bloc de données associé (AD) et de la séquence de bits de nouveauté (ImplAD), concaténés dans l'ordre utilisé lors du cryptage, en tant que premier paramètre, ainsi que de la première partie de texte crypté (CT$_1$) en tant que second paramètre.

**3.** Procédé selon la revendication 1 ou 2,
**caractérisé en ce que**
le bloc de données associé (AD) et/ou la séquence de bits de nouveauté (ImplAD) sont prédéfinis de manière à être vides.

**4.** Procédé selon la revendication 1, 2 ou 3,
**caractérisé en ce que**
une fonction de décomposition (ZF) non conventionnelle est utilisée en tant que fonction de décomposition (ZF).

**5.** Procédé selon l'une des revendications 1 à 4,
**caractérisé en ce que**
une fonction de cryptage préservant la nouveauté est utilisée en tant que l'au moins une fonction de cryptage ($ENCR_1$, $ENCR_2$).

**6.** Procédé selon l'une des revendications 1 à 5,
**caractérisé en ce que**
la fonction de décomposition (ZF) est définie une seule fois et implémentée dans le cryptage ($ENCR^{ZF}_{ENCR1,ENCR2}{}^{M}$) ainsi que dans le décryptage ($DECR^{ZF}_{OECR1,OECR2}{}^{M}$).

**7.** Procédé selon l'une des revendications 1 à 5,
**caractérisé en ce que**
la fonction de décomposition (ZF) pour une ou plusieurs sessions successives de deux partenaires de communication avec le cryptage ($ENCR^{ZF}_{ENCR1,ENCR2}{}^{M}$) et le décryptage ($DECR^{ZF}_{DECR1,DECR2}{}^{M}$) est convenue entre les partenaires de communication.

**8.** Procédé selon l'une des revendications 1 à 5,
**caractérisé en ce que**
la fonction de décomposition (ZF) est définie en tant qu'ensemble de fonctions de décomposition (ZF) et est implémentée dans le cryptage ($ENCR^{ZF}_{ENCR1,ENCR2}{}^{M}$) ainsi que dans le décryptage ($DECR^{ZF}_{OECR1,OECR2}{}^{M}$).

**9.** Procédé selon la revendication 8,
**caractérisé en ce que**
les différentes fonctions de décomposition sont numérotées dans l'ensemble de fonctions de décomposition (ZF) à des fins d'identification.

**10.** Procédé selon la revendication 9,
**caractérisé en ce que**
le numéro de la fonction de décomposition (ZF) utilisée pour le cryptage et nécessaire pour le décryptage est intégré dans le texte clair (PT) à crypter.

**11.** Procédé selon la revendication 10,
**caractérisé en ce que**
le numéro est disposé à une position prédéfinie à l'intérieur du texte clair (PT) ou à l'intérieur de l'une ou des deux parties de texte clair ($PT_1$, $PT_2$).

**12.** Procédé selon la revendication 9, 10 ou 11,
**caractérisé en ce que**
le texte clair (PT) est complété par un bit d'indication qui indique si le numéro de la fonction de décomposition (ZF) est contenu ou non dans le texte clair (PT) ou dans l'une des parties de texte clair ($PT_1$, $PT_2$).

**13.** Procédé selon la revendication 12,
**caractérisé en ce que**
le bit d'indication est disposé à une position prédéfinie à l'intérieur du texte clair (PT) ou à l'intérieur de l'une ou des deux parties de texte clair ($PT_1$, $PT_2$).

**14.** Procédé selon l'une des revendications 9 à 13,
**caractérisé en ce que**
en l'absence de numéro, une fonction de décomposition standard (ZF) est utilisée.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102021001095 A1
- DE 102019113026 A1
- WO 2009013420 A1
- WO 2019079890 A1